# EUROPÄISCHE PATENTANMELDUNG

(11) **EP 2 636 653 A1**
(43) Veröffentlichungstag der Anmeldung: **11.09.2013**
(21) Anmeldenummer: 12158888.3
(22) Anmeldetag: 09.03.2012
(51) Int. Cl.: C03C 17/30, C03C 27/04, E04F 13/14, C09D 183/04

(54) **Glasbauelement und Verfahren zu dessen Herstellung**

(71) Anmelder: Sika Technology AG, 6340 Baar (CH)
(72) Erfinder: Buck, Manuel, 5412 Gebenstorf (CH); Cutri, Enrico, 8045 Zürich (CH); Döbbel, Florian, 8967 Widen (CH); Müller, Ulli, 8903 Birmensdorf (CH)
(74) Vertreter: Sika Patent Attorneys

(57) **Zusammenfassung**

Bei einem Glasbauelement, mit einer kunststoffbeschichteten Glastafel und mindestens einem hieran befestigten Montageelement, ist die Glastafel vollflächig, insbesondere mit einem Elastomer auf Siliconbasis, beschichtet und die Beschichtung stellt zugleich eine Klebeverbindung mit einem auf der Glastafel aufliegenden Abschnitt des Montageelements her.

## Beschreibung

### Technisches Gebiet

Die Erfindung betrifft ein Glasbauelement, mit einer kunststoffbeschichteten Glastafel und mindestens einem hieran befestigten Montageelement, sowie ein Verfahren zur Herstellung eines solchen.

### Stand der Technik

Fassaden und Überdachungen, die gänzlich oder jedenfalls zu wesentlichen Teilen aus Glas bestehen, sind aus der modernen Architektur nicht mehr wegzudenken. Sie werden zumeist aus ebenen Glastafeln gebildet, die in geeignete (zumeist aus Stahl bestehende) Tragkonstruktionen eingesetzt werden. Vielfach sind diese Glastafeln eingefärbt und/oder mit Funktionsbeschichtungen versehen, um beispielsweise Infrarotstrahlung vom inneren eines Gebäudes fern zu halten oder bestimmte optische Effekte zu realisieren.

Bekannt sind insbesondere Glastafeln mit aufgedampften Dünnschichten, die das Reflexionsvermögen im Infrarot-Bereich und teils auch im sichtbaren Bereich und UV-Bereich erhöhen. Um qualitativ hochwertige Verglasungen zu erzeugen, die opak erscheinen, wird üblicherweise eine aufwendige und teure abtragende Oberflächenbehandlung des Glases ausgeführt.

Es ist, beispielsweise aus der US 4,814,230 oder der US 7,309,734 B2, auch bekannt, durch Auftrag einer pigmenthaltigen Elastomerschicht opake Glastafeln oder solche mit besonderen optischen Eigenschaften zu erzeugen, die durchaus qualitativ hohen Ansprüchen genügen können.

### Offenbarung der Erfindung

Mit der Erfindung wird ein Glasbauelement mit den Merkmalen des Anspruchs 1 bereitgestellt. Des Weiteren werden mehrere Verfahren zu dessen Herstellung angegeben.

Ein Aspekt der Erfindung besteht darin, eine primär zur Erzielung optischer Effekte vorgesehene Beschichtung einer als Bauwerks-Element vorgesehenen Glastafel zugleich zu Befestigungszwecken zu nutzen. Dies bedeutet insbesondere deshalb eine Abkehr vom üblichen Vorgehen des Fachmanns, weil Schichten mit Befestigungswirkung (speziell Klebstoffschichten) üblicherweise nur in Teilbereichen größerer Teile gebildet werden, die für eine hinreichende Kraftübertragung benötigt werden. Bei den Beschichtungen der in Rede stehenden Art handelt es sich aber typischerweise - wenn auch nicht notwendigerweise - um auf eine gesamte Oberfläche der Glastafel aufgebrachte Kunststoffschichten. Diese zugleich zum Zweck der stoffschlüssigen Befestigung eines Montagelements auf der Glastafel zu nutzen, ist ein ebenso überraschender wie vorteilhafter Gedanke. Er ermöglicht erhebliche Vereinfachungen und Kostensteigerungen im Produktionsprozess, weil ein zusätzlicher und zudem typischerweise lokal exakt zu begrenzender Klebstoffauftrag entfallen kann.

Ein weiterer Vorteil der Erfindung besteht darin, dass die zum Zwecke der Befestigung des Montageelements relativ dick auszubildende Kunststoffschicht (speziell Elastomerschicht auf Siliconbasis) das Bruchverhalten des Glasbauelements verbessert und die Einhaltung von Sicherheitsbestimmungen erleichtert. Die Elastomerschicht hält Bruchstücke bis zu einem gewissen Grade im Verbund des Bauelements fest, kann also dazu beitragen, deren Herabfallen oder Davonfliegen zu verhindern.

In einer Ausführung der Erfindung ist der aufliegende Abschnitt des oder jedes Montageelements durch ein Lochblech gebildet, dessen Löcher mindestens teilweise von der Beschichtung der Glastafel durchdrungen sind. Diese Ausführung ist durch den Einsatz von kommerziell in großer Vielfalt verfügbaren einfachen Lochblechen flexibel in der Anwendung sowie kostengünstig und ermöglicht einen besonders innigen Formschluss zwischen Glastafel und Montageelement, also die Erzielung einer hohen Festigkeit ihrer Verbindung.

In einer weiteren Ausführung der Erfindung ist vorgesehen, dass die Oberfläche der Glastafel zu mehr als einem Viertel, insbesondere zu einem überwiegenden Flächenanteil, mit dem aufliegenden Abschnitt des Montageelements oder aufliegenden Abschnitten mehrerer Montagelemente bedeckt ist. Dies ermöglicht in vorteilhafter Weise eine gute Kraftverteilung bei der Montage der Glasbauelemente und die Vermeidung von Lastspitzen und hieraus resultierender Bruchgefahr.

In einer weiteren Ausführung umfasst das oder mindestens ein Montageelement einen von dem aufliegenden Abschnitt aufstehenden Befestigungswinkel. Die Befestigungswinkel lassen sich auf technologisch einfacher, kostengünstiger Weise durch Abkanten des bevorzugt eingesetzten Lochblechs bilden und sind (mit entsprechenden Öffnungen versehen) flexibel für unterschiedliche Montagesituationen einsetzbar.

In weiteren Ausführungen der Erfindung hat die Beschichtung eine Dicke im Bereich zwischen 1 und 7mm, insbesondere im Bereich zwischen 2 und 5mm. Es handelt sich also bei der Glastafel-Beschichtung um eine Dickschicht, deren genaue Dicke in Abhängigkeit von der Dicke und Größe der Glastafel und der spezifischen Zuordnung von Montageelementen gemäß dem Montageanforderungen festzulegen ist.

In einer weiteren Ausführung ist die Beschichtung derart dicht eingefärbt oder pigmentiert, dass das Glasbauelement im sichtbaren Bereich intransparent ist und das oder jedes Montageelement verdeckt. Dies gewährleistet ein optisch hochwertiges Erscheinungsbild einer mit den Glasbauelementen gebildeten Fassade oder Nachkonstruktion o. ä., unabhängig von der konkreten Konfiguration der Unterkonstruktion und zugeordneten Montageelemente. Die Beschichtung kann bei den angegebenen bevorzugten Dicke insbesondere auch weiß eingefärbt oder pigmentiert sein und gleichwohl jegliche Unterkonstruktion verdecken; selbstverständlich gilt dies ebenso für eine schwarze oder farbige Einfärbung oder Pigmentierung.

Bei der Beschichtung des Glasbauelements handelt es sich insbesondere um ein elastomer auf Siliconbasis bzw. um eine Siliconbeschichtung, d.h., dass das Ausgangsmaterial für die Beschichtung eine Siliconzusammensetzung ist.
Für die Beschichtung besonders geeignete Siliconzusammensetzungen sind insbesondere kondensationsvernetzende zweikomponentige Siliconzusammensetzungen. Vorzugsweise handelt es sich dabei um eine zweikomponentige Siliconzusammensetzung bestehend aus einer Komponente **A** umfassend
- mindestens ein Hydroxylgruppen terminiertes Polydiorganosiloxan **P;** und einer Komponente **B** umfassend
- mindestens einen Vernetzer für Polydiorganosiloxane; sowie
- mindestens einen Katalysator für die Vernetzung von Polydiorganosiloxanen.

Geeignete Polydiorganosiloxane sind insbesondere Polydiorganosiloxan **P** der Formel (I), 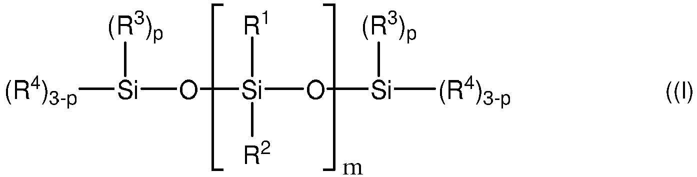 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
der Index p für einen Wert von 0, 1 oder 2 steht; und
der Index m so gewählt ist, dass das Polydiorganosiloxan **P** bei einer Temperatur von 23°C eine Viskosität von 10 bis 500'000 mPa·s aufweist. Insbesondere stehen die Reste R¹ und R² für Alkylreste mit 1 bis 5, insbesondere mit 1 bis 3, C-Atomen, bevorzugt für Methylgruppen.
Weiterhin ist der Index m insbesondere so gewählt, dass das Polydiorganosiloxan **P** bei einer Temperatur von 23 °C eine Viskosität von 1'000 bis 100'000 mPa·s. Die Viskosität wird typischerweise bestimmt nach DIN 53018.

Handelt es sich beim Polydiorganosiloxan **P** in der Komponente **A** der zweikomponentigen Siliconzusammensetzung um ein Hydroxylgruppen terminiertes Polydiorganosiloxan, steht der Index p typischerweise für einen Wert von 2. Hydroxylgruppen terminierte Polydiorganosiloxane sind bekannt und kommerziell erhältlich. Auch die Herstellung derartiger Polydiorganosiloxane erfolgt in bekannter Art. Beispielsweise ist sie beschrieben in US 4,962,152, deren Offenbarung hiermit durch Bezugnahme eingeschlossen ist.

Handelt es sich beim Polydiorganosiloxan **P** in der Komponente **A** der zweikomponentigen Siliconzusammensetzung, um ein Polydiorgano-siloxan **P** der Formel (I), bei welchem die Reste R⁴ für Alkoxy-, Acetoxy- oder Ketoximgruppen stehen, sind diese insbesondere Alkoxy- oder Ketoxim¬gruppen. Der Index p steht dann insbesondere für einen Wert von 0 oder 1.
Bevorzugte Alkoxygruppen sind Methoxy-, Ethoxy- oder Isopropoxygruppen.
Bevorzugte Ketoximgruppen sind Dialkylketoximgruppen deren Alkylgruppen jeweils 1 bis 6 C-Atome aufweisen. Vorzugsweise stehen die beiden Alkylgruppen der Dialkylketoximgruppen unabhängig von einander für Methyl-, Ethyl-, n-Propyl-, iso-Propyl-, n-Butyl- oder iso-Butylgruppen. Besonders bevor¬zugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Meist bevorzugt steht die Ketoximgruppe für eine Ethylmethylketoximgruppe.

Die Komponente **B** der zweikomponentigen Siliconzusammensetzung umfasst mindestens einen Vernetzer für Polydiorganosiloxane. Insbesondere ist der Vernetzer ein Silan der Formel (II).

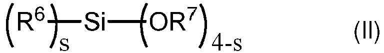

Dabei steht der Rest R⁶ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.

Der Rest R⁷ steht unabhängig voneinander für ein Wasserstoffatom, oder für einen Alkylrest mit 1 bis 12 C-Atomen, oder für einen Oximrest mit 1 bis 12 C-Atomen, oder für einen Acylrest mit 1 bis 12 C-Atomen. Insbesondere steht der Rest R⁷ für einen Alkylrest mit 1 bis 5, insbesondere 1 bis 3, C-Atomen, bevorzugt für eine Methyl- oder für eine Ethylgruppe.
Der Index s steht für einen Wert von 0 bis 4, insbesondere für einen Wert von 0, 1 oder 2, bevorzugt für einen Wert von 0.

Für die Wahl des Silans der Formel (II) als Vernetzer für Polydiorganosiloxane können unterschiedliche Anforderungen an die Siliconzusammensetzung ausschlaggebend sein. Einerseits spielt die Reaktivität des Silans eine wichtige Rolle, wobei grundsätzlich höherreaktive Silane bevorzugt werden. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt.

Beispiele geeigneter Silane der Formel (II) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan oder Tetra-n-butoxysilan.
Besonders bevorzugt handelt es sich beim Silan der Formel (II) um Vinyltrimethoxysilan oder Tetraethoxysilan oder deren Mischung.

Weiterhin können die Silane auch bereits teilweise (ein Teil aller R⁷ = H) oder vollständig hydrolysiert (alle R⁷ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden. Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich kann als Vernetzer für die zweikomponentige Siliconzusammensetzung auch eine beliebige Mischung der vorhergehend genannten Silane eingesetzt werden.

Der Anteil des Vernetzers für Polydiorganosiloxane beträgt vorzugsweise 0.1 bis 20 Gew.-%, insbesondere 1 bis 15 Gew.-%, bevorzugt 2 bis 10 Gew.-%, der gesamten Siliconzusammensetzung.

Beim Katalysator für die Vernetzung von Polydiorganosiloxanen handelt es sich insbesondere um eine zinnorganische Verbindung oder um ein Titanat oder um eine Kombination davon.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butyl-zinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-butylzinndiacetat, Di-n-octylzinndi-2-ethylhexanoat, Di-n-octylzinndi-2,2-dimethyloctanoat, Di-n-octylzinndimaleinat und Di-n-octylzinndilaurat.
Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl-oder Tetraisopropyltitanat.
Weiterhin geeignete Titanate weisen mindestens einen mehrzähnigen Liganden, auch Chelatligand genannt, auf. Insbesondere ist der mehrzähnige Ligand ein zweizähniger Ligand.
Geeignete Titanate sind beispielsweise unter den Handelsnamen Tyzor^{®} AA, GBA, GBO, AA-75, AA-65, AA-105, DC, BEAT, IBAY kommerziell erhältlich von der Firma DuPont, USA.

Selbstverständlich ist es möglich oder in gewissen Fällen sogar bevorzugt, Mischungen verschiedener Katalysatoren einzusetzen. Beispielsweise ist der Katalysator eine Mischung einer zinnorganischen Verbindung mit einem Titanat.

Der Anteil des Katalysators für die Vernetzung von Polydiorganosiloxanen beträgt vorzugsweise 0.001 bis 10 Gew.-%, insbesondere 0.005 bis 4 Gew.-%, bevorzugt 0.01 bis 3 Gew.-%, der gesamten zweikomponentigen Siliconzusammensetzung.

Die zweikomponentige Siliconzusammensetzung kann gegebenenfalls noch weitere Bestandteile enthalten.
Derartige zusätzliche Bestandteile sind insbesondere Weichmacher, anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive. Geeignete weitere Bestandteile, insbesondere Haftvermittler und Weichmacher, welche in der zweikomponentigen Siliconzusammensetzung enthalten sein können, sind beispielsweise beschrieben in den Absätzen [0051] bis [0055] der Patentanmeldung US 2010/063190 A1, deren gesamte Offenbarung hiermit durch Bezugnahme eingeschlossen ist.

Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.
Weiterhin ist es vorteilhaft, alle genannten, in der zweikomponentigen Siliconzusammensetzung gegebenenfalls vorhandenen, Bestandteile so auszuwählen, dass die Lagerstabilität der beiden Komponenten der zweikomponentigen Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmass auftreten.

Als Weichmacher sind besonders trialkylsilylterminierte Polydialkylsiloxane geeignet, insbesondere trimethylsilylterminierte Polydimethylsiloxane. Bevorzugt werden trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Es ist auch möglich anstatt der Polysiloxan-Weichmacher, andere organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.
Der Anteil des Weichmachers beträgt vorzugsweise 2 bis 15 Gew.-%, insbesondere 5 bis 10 Gew.-%, der gesamten zweikomponentigen Siliconzusammensetzung.

Weiterhin kann die Zusammensetzung weiterhin mindestens einen Füllstoff aufweisen. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. iterhin kann durch einen Füllstoff das Erscheinungsbild der Siliconzusammensetzung, insbesondere im ausgehärteten Zustand beeinflusst werden.
Geeignete Füllstoffe sind beispielsweise natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon back"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
In einer bevorzugten Ausführungsform enthält die Siliconzusammensetzung hochdisperse Kieselsäuren aus Pyrolyseprozessen oder Calciumcarbonate als Füllstoff.
Es ist durchaus möglich und kann sogar von Vorteil sein, eine Mischung verschiedener Füllstoffe einzusetzen.
Eine geeignete Menge Füllstoff liegt beispielsweise im Bereich von 1 bis 40 Gew.-%, insbesondere 5 bis 30 Gew.-%, bevorzugt 10 bis 20 Gew.-%, bezogen auf die gesamte zweikomponentige Siliconzusammensetzung.

In einer ebenfalls bevorzugten Ausführungsform enthält die zweikomponentige Siliconzusammensetzung keine oder nur geringe Mengen an Füllstoffen.

In einer besonders bevorzugten Ausführungsform enthält die zweikomponentige Siliconzusammensetzung eine Mittel zum einfärben der Zusammensetzen, wobei dieses Mittel insbesondere eine Farbpaste oder ein Pigment ist.

Bei der Applikation der zweikomponentigen Siliconzusam¬mmensetzung werden die Komponenten **A** und **B,** beispielsweise durch Rühren, Kneten, Walzen oder dergleichen, oder in einem Mischer oder über einen Statikmischer, miteinander vermischt, wobei es zur Aushärtung der Zusammensetzung kommt. Die Aushärtung der zweikomponentigen Siliconzusammensetzung erfolgt insbesondere bei Raumtemperatur.

Insbesondere wird die zweikomponentige Siliconzusammensetzung so eingesetzt, dass das Gewichtsverhältnis der Komponente **A** zu Komponente **B** ≥ 1:1, insbesondere von 3:1 bis 15:1, bevorzugt von 10:1 bis 13:1, beträgt.

In einer Variante des vorgeschlagenen Verfahrens wird ein Ausgangsmaterial der Beschichtung im flüssigen Zustand auf die Glastafel aufgegossen oder -gespritzt, derart, dass sich eine ebene Oberfläche durch Verlaufen ausbildet. In einer anderen Ausführung kann vorgesehen sein, dass das Ausgangsmaterial der Beschichtung im flüssigen oder pastösen Zustand auf die Glastafel aufgerakelt wird. Auch ein weitgehend selbst-nivelierendes Aufgießen oder Aufspritzen der noch (dick-)flüssigen Zusammensetzung in Kombination mit einem anschließenden Rakeln zum Ausgleich noch bestehender Niveauunterschiede ist möglich.

Alternativ kann das Verfahren so ausgestaltet sein, dass das Ausgangsmaterial der Beschichtung im pastösen Zustand auf die Glastafel aufgewalzt wird, wobei insbesondere eine Kunststofffolie zwischen die Oberfläche des Ausgangsmaterials und die Oberfläche der Beschichtungswalze eingelegt und nach dem Aufbringen und vor dem Aushärten der Beschichtung wieder abgezogen wird. Hierdurch wird ein Anhaften von Material an der Walzoberfläche verhindert.

In einer Ausgestaltung der erwähnten Ausführungen wird der flüssige oder pastöse Zustand des Ausgangsmaterials mindestens unter anderem durch Einstellung einer Vorreaktionszeit vor dem Aufbringen auf die Glastafel eingestellt. Es versteht sich, dass daneben andere Parameter, wie ein Lösungsmittelanteil, die Temperatur etc., von Bedeutung sind.

Unabhängig von der konkreten Art des Aufbringens des Elastomer-Ausgangsmaterials wird das oder jedes zu befestigende Montageelement auf die gebildete Schicht "schwimmend" aufgesetzt (oder ggfs. leicht eingedrückt), so lange das Ausgangsmaterial noch nicht reagiert hat. In Abhängigkeit von der Zusammensetzung und deren Reaktionsablauf wird insbesondere ein Montageablauf gewählt, der zeitlich ausreichende Reserven für eine innige stoffflüssige Verbindung zwischen Glastafel und Montageelement(en) mittels der Elastomerschicht bietet. Es kann zweckmäßig sein, die Montageelemente beim Aufsetzen auf die noch (dick)-flüssige oder pastöse Ausgangsmaterial-Schicht seitlich fixiert zu halten, bis sie gemäß dem fortschreitenden Härten der Schicht durch diese selbst hinreichend fixiert sind.

Das Aushärten der Beschichtung kann, je nach deren Zusammensetzung, hinreichend schnell durch Lufttrocknung erfolgen, es können aber auch Infrarotheizer, ggfs. eine Zufuhr von feuchter Luft oder Dampf oder andere an sich bekannte Mittel zur Beschleunigung dieses Vorganges eingesetzt werden.

## Patentansprüche

1. Glasbauelement, mit einer kunststoffbeschichteten Glastafel und mindestens einem hieran befestigten Montageelement,
wobei die Glastafel vollflächig, insbesondere mit einem Elastomer auf Siliconbasis, beschichtet ist und die Beschichtung zugleich eine Klebeverbindung mit einem auf der Glastafel aufliegenden Abschnitt des Montageelements herstellt.

2. Glasbauelement nach Anspruch 1, wobei der aufliegende Abschnitt des oder jedes Montageelements durch ein Lochblech gebildet ist, dessen Löcher mindestens teilweise von der Beschichtung der Glastafel durchdrungen sind.

3. Glasbauelement nach Anspruch 1 oder 2, wobei die Oberfläche der Glastafel zu mehr als einem Viertel, insbesondere zu einem überwiegenden Flächenanteil, mit dem aufliegenden Abschnitt des Montageelements oder aufliegenden Abschnitten mehrere Montagelemente bedeckt ist.

4. Glasbauelement nach einem der vorangehenden Ansprüche, wobei das oder mindestens ein Montageelement einen von dem aufliegenden Abschnitt aufstehenden Befestigungswinkel umfasst.

5. Glasbauelement nach einem der vorangehenden Ansprüche, wobei die Beschichtung eine Dicke im Bereich zwischen 1 und 7mm, insbesondere im Bereich zwischen 2 und 5mm, hat.

6. Glasbauelement nach einem der vorangehenden Ansprüche, wobei die Beschichtung derart dicht pigmentiert ist, dass das Glasbauelement im sichtbaren Bereich intransparent ist und das Montageelement verdeckt.

7. Glasbauelement nach einem der vorangehenden Ansprüche, wobei das Ausgangsmaterial für die Beschichtung eine kondensationsvernetzende, zweikomponentige Siliconzusammensetzung ist.

8. Glasbauelement nach Anspruch 7, wobei die zweikomponentige Siliconzusammensetzung aus einer Komponente **A** umfassend
- mindestens ein Hydroxylgruppen terminiertes Polydiorganosiloxan **P;**
und einer Komponente **B** umfassend
- mindestens einen Vernetzer für Polydiorganosiloxane; sowie
- mindestens einen Katalysator für die Vernetzung von Polydiorganosiloxanen,
besteht.

9. Glasbauelement nach Anspruch 7 oder 8, wobei die zweikomponentige Siliconzusammensetzung zusätzlich mindestens eine Farbpaste oder ein Farbpigment umfasst.

10. Verfahren zur Herstellung eines Glasbauelements nach einem der vorangehenden Ansprüche, wobei ein Ausgangsmaterial der Beschichtung im flüssigen Zustand auf die Glastafel aufgegossen oder
- gespritzt wird, derart, dass sich eine ebene Oberfläche durch Verlaufen ausbildet.

11. Verfahren zur Herstellung eines Glasbauelements nach einem der Ansprüche 1 - 9, wobei ein Ausgangsmaterial der Beschichtung im flüssigen oder pastösen Zustand auf die Glastafel aufgerakelt wird.

12. Verfahren zur Herstellung eines Glasbauelements nach einem der Ansprüche 1 - 9, wobei ein Ausgangsmaterial der Beschichtung im pastösen Zustand auf die Glastafel aufgewalzt wird, wobei insbesondere eine Kunststofffolie zwischen die Oberfläche des Ausgangsmaterials und die Oberfläche der Beschichtungswalze eingelegt und nach dem Aufbringen und vor dem Aushärten der Beschichtung wieder abgezogen wird.

13. Verfahren nach einem der Ansprüche 10 -12, wobei der flüssige oder pastöse Zustand des Ausgangsmaterials mindestens unter anderem durch Einstellung einer Vorreaktionszeit vor dem Aufbringen auf die Glastafel eingestellt wird.
